# EUROPÄISCHE PATENTANMELDUNG

(11) **EP 2 654 002 A1**
(43) Veröffentlichungstag der Anmeldung: **23.10.2013**
(21) Anmeldenummer: 13157053.3
(22) Anmeldetag: 27.02.2013
(51) Int. Cl.: G06Q 10/08

(54) **Vorrichtung zur Visualisierung von Lagerdaten, insbesondere eines Kanban-Systems**

(30) Priorität: 17.04.2012 DE 102012103324
(71) Anmelder: Ferdinand Gross GmbH & Co. KG, 70771 Leinbelden-Echterdingen (DE)
(72) Erfinder: HERING, Gerald, 70597 Stuttgart (DE); ERB, Thomas, 72135 Dettenhausen (DE)
(74) Vertreter: Fleck, Hermann-Josef

(57) **Zusammenfassung**

Die Erfindung betrifft eine Vorrichtung zur Visualisierung von Lagerdaten, insbesondere eines Kanban-Systems, wobei in wenigstens einer Lagereinheit mehrere Behälter mit Verbrauchsgütern angeordnet sind, wobei einer Speichereinheit Zustandsdaten der Behälter über eine Datenübertragungsverbindung zuleitbar sind, wobei die Zustandsdaten in einer Verknüpfungseinrichtung verschaltbar sind, und wobei die Zustandsdaten eines oder mehrerer Behälter oder einer daraus berechneten Größe optisch und/oder akustisch an einer Signalisierungseinheit ausgebbar sind.

Mit einer solchen Vorrichtung kann eine effiziente Lagerhaltung erreicht werden.

## Beschreibung

Die Erfindung betrifft eine Vorrichtung zur Visualisierung von Lagerdaten, insbesondere eines Kanban-Systems.

Kanban-Systeme werden vielfältig in der industriellen Fertigung eingesetzt. Dabei sind als Lagereinheiten Regale verwendet, die mehrere Fachböden aufweisen. Auf den Fachböden sind Behälter aufgestellt. Diese Behälter bevorraten Verbrauchsgüter, beispielsweise Befestigungsmateriallen wie Schrauben, Muttern, Splinte, etc. Die Behälter sind auf die Regalböden so aufgesetzt, dass in der Regel zwei gleiche Behälter hintereinander in Regaltiefenrichtung gestellt sind. Der vordere Behälter ist dabei dem Benutzer im Zugriff. Er entnimmt entsprechend der erforderlichen Montagearbeiten daraus die Verbrauchsgüter. Ist der Behälter im Zugriff leer, so wird er aus dem Regal entnommen und zur Neubefüllung in ein Reservoir gestellt. Der dahinter stehende Behälter wird dann nach vorne gezogen, und der Monteur kann sich aus diesem nun vorne stehenden Behälter bedienen. Der im Reservoir befindliche leere Behälter wird von einem Befestigungsmateriallieferanten erfasst, neu befüllt, und anschließend hinter den im Zugriff stehenden Behälter in das Regal wieder eingesetzt. Auf diese Weise ergibt sich ein Kreislauf, der sicherstellt, dass stets ausreichend Montagematerial zur Verfügung steht.

Nun kann es vorkommen, dass aufgrund von Änderungen der Montagesituation einige Behälter der Lagereinheit sehr selten oder überhaupt nicht benutzt werden. Diese Behälter blockieren dann Lagerraum und binden darüber hinaus Kapital. Weiterhin kommt es mitunter in großen Fertigungseinheiten vor, dass ein bestimmtes Verbrauchsgut an einer Lagereinheit nicht mehr in ausreichendem Maße zur Verfügung steht. An einer weiteren Lagereinheit, die abseits der ersten Lagereinheit steht, kann dagegen dieses Verbrauchsgut hingegen noch ausreichend bevorratet sein. Die Monteure der beiden Lagereinheiten kennen jedoch den Lagerzustand der jeweils anderen Lagereinheit nicht. Mithin entsteht an der ersten Lagereinheit ein vermeidbarer Lagerengpass.

Es ist Aufgabe der Erfindung, eine Vorrichtung zur Visualisierung von Lagerdaten bereitzustellen, mit der insbesondere bei Kanban-Systemen die Lagerhaltung effizienter gestaltet ist.

Diese Aufgabe wird mit den Merkmalen des Anspruches 1 gelöst. Demgemäß ist es vorgesehen, eine Vorrichtung zur Visualisierung von Lagerdaten zu verwenden, wobei in wenigstens einer Lagereinheit mehrere Behälter mit Verbrauchsgütern angeordnet sind, wobei einer Speichereinheit Zustandsdaten der Behälter über eine Datenübertragungsverbindung zuleitbar sind. Die Zustandsdaten können insbesondere Eigenschaftsdaten der Behälter, Ortsdaten der Behälter und Fülldaten der Behälterenthalten. Diese Zustandsdaten werden über eine Datenübertragungsverbindung einer Verknüpfungseinrichtung zugeleitet. In dieser Verknüpfungseinrichtung werden die Zustandsdaten ausgewertet. Weiterhin können die Zustandsdaten oder aus den Zustandsdaten errechnete Größen in einer Speichereinheit abgelegt werden.

Erfindungsgemäß werden nun die Zustandsdaten in der Verknüpfungseinrichtung derart aufbereitet, dass sie optisch und/oder akustisch an einer Signalisierungseinheit ausgebbar sind. Mithin kann die Lagerverwaltung sich über die Signalisierungseinheit den Lagerzustand ihrer Lagereinheiten veranschaulichen. Dabei kann beispielsweise der Füllzustand und die Art der Verbrauchsgüter jeder Lagereinheit ausgewertet werden. Abhängig von dem Auswertergebnis kann dann bedarfsweise eine außerplanmäßige Neubestellung veranlasst werden. Weiterhin können auch Verbrauchsmaterialien, die in einer bestimmten Lagereinheit nicht mehr benötigt werden, aussortiert werden.

Gemäß einer bevorzugten Erfindungsvariante kann es vorgesehen sein, dass aus den Zustandsdaten oder den daraus errechneten Größen eine Bilddarstellung erzeugt ist, die zwei- oder dreidimensional matrixartig die Behälter entsprechend ihrer Anordnung in der Lagereinheit visualisiert. Auf diese Weise werden die Lagereinheiten realitätsnah veranschaulicht. Die Bilddarstellung ist mithin entsprechend der Anordnung der Behälter auf den Regalböden der Lagereinheiten gewählt. Anhand dieser anwenderfreundlichen Darstellung kann insbesondere vor Ort an einer Lagereinheit unmittelbar ein gesuchter Behälter visualisiert und lokalisiert werden.

Eine weitere bevorzugte Erfindungsvariante ist derart, dass die die Behälter repräsentierenden Grafiken in unterschiedlichen optischen Anmutungen, insbesondere Farben, darstellbar sind. Auf diese Weise können beispielsweise unterschiedliche Füllzustände der einzelnen Behälter veranschaulicht werden. Behälter, die eine kritische Füllmenge unterschritten haben, können beispielsweise rot visualisiert werden, während Behälter mit ausreichender Füllmenge mit grün visualisiert sein können. Eine solche Darstellung ist für den Benutzer eindeutig.

Eine erfindungsgemäße Vorrichtung kann auch derart sein, dass mittels einer Filtereinheit Zustandsdaten der Behälter mit Soll-Werten verglichen werden, und dass abhängig von diesem Vergleichsergebnis die optische Anmutung der Behälter individuell von einer Recheneinheit erzeugt wird. Beispielsweise kann auf diese Weise über einen Filter die Lieferkette visualisiert werden. Eine denkbare Anwendung ist dabei dergestalt, dass alle im Zugriff befindlichen Behälter dem Benutzer veranschaulicht werden. Weiter denkbar ist es, dass alle im Vorrat befindlichen Behälter, also solche Behälter, die nicht im Zugriff sind, veranschaulicht werden. Die Veranschaulichung kann beispielsweise mit einer anderen Farbgestaltung oder dergleichen vorgenommen werden. Bezüglich der Lieferkette kann auch eine Filterung derart vorgenommen werden, dass die gescannten Behälter veranschaulicht werden. Jeder Behälter enthält in einem Kanban-System einen Barcode oder dergleichen Verschlüsselungselement, in dem Zustandsdaten des Behälters verschlüsselt sind. Wenn dieses Verschlüsselungselement beispielsweise mittels eines Barcodescanners aufgenommen wird, so kann dieses Signal mittels einer Übertragungseinheit an die Verknüpfungseinheit übermittelt werden. Diese Verknüpfungseinheit generiert dann einen Lieferauftrag zur Nachlieferung des angeforderten (gescannten) Verbrauchsgutes. Denkbar ist auch die Verwendung eines Filters, der die Behälter veranschaulicht, die bereits gescannt wurden oder dergleichen zur Nachlieferung beauftragt wurden, und die sich bereits in Zustellung befinden. Schließlich kann auch ein Filter verwendet werden, der alle Behälter visualisiert, die sich im Rückstand befinden. Im Rückstand befinden sich die Behälter dann, wenn das angeforderte Gut vom Verbrauchsgutlieferanten nicht anfragegerecht geliefert werden kann.

Gemäß einer Erfindungsvariante kann es vorgesehen sein, dass die die Behälter repräsentierenden Grafiken individuell mittels einer Cursorsteuerung anwählbar sind, und dass von dem der angewählten Grafik zugeordneten Behälter numerisch alle oder einige Zugangsdaten angezeigt werden. Mithin generiert eine Recheneinheit zusätzlich zu der visualisierten Darstellung des Behälters eine Anzeige, die einige oder vorzugsweise alle Zustandsdaten explizit angibt

Denkbar ist es auch, dass die die Behälter repräsentierenden Grafiken individuell mittels einer Cursorsteuerung anwählbar sind, und dass bei Anwahl einer Grafik diese optisch an einer anderen Stelle der Bilderzeugungseinheit neu erstellt wird. Auf diese Weise lässt sich ein grafisch visualisierter Behälter aus der Lagereinheit optisch isolieren, sodass dessen Lagerort besser erkennbar wird.

Eine weitere Erfindungsvariante ist derart, dass auf der Bilderzeugungseinheit eine Auswahlliste erzeugt ist, die zumindest einen Teil der Behälter mit Kennungen enthält, und dass bei Auswahl einer Kennung eine Grafik, die den angewählten Behälter repräsentiert, in optischer individualisierter Darstellung anzeigt.

Wenn ein Monteur die ihm zugeordnete Lagereinheit für sich ergonomisch günstiger gestalten will, so kann er die einzelnen Behälter innerhalb seiner Lagereinheit umsortieren. Um dabei auch die Darstellung der Signalisierungseinheit anzupassen, kann es erfindungsgemäß vorgesehen sein, dass die Grafiken in ihrer Positionierung innerhalb der matrixartigen Darstellung versetzbar sind, und dass dieser Positionswechsel an die Verknüpfungseinrichtung übermittelbar ist.

Die Zustandsdaten können absolute Messwerte sein, die quantitativ eindeutig sind, oder es können qualitative Zustandsdaten Verwendung finden. Beispielsweise kann die Füllmenge eines Behälters in Abhängigkeit des üblichen Verbrauches pro Zeiteinheit errechnet werden. Mithin können dann die Zustandsdaten mittels einer Zeitmesseinrichtung festgestellt werden.

Um die Behälter innerhalb der Lagereinheit eindeutig zuordnen zu können, ist es gemäß einer Erfindungsvariante vorgesehen, dass die Zustandsdaten Ortsangaben enthalten, die die Position des Behälters innerhalb der Lagereinheit angeben.

Die Erfindung wird im Folgenden anhand eines in den Zeichnungen dargestellten Ausführungsbeispieles näher erläutert. Es zeigen:
- Figur 1: in schematischer Darstellung eine Vorrichtung zur Visualisierung von Lagerdaten; und
- Figur 2: die Bilddarstellung einer Bilderzeugungseinheit in schematischer Ansicht.

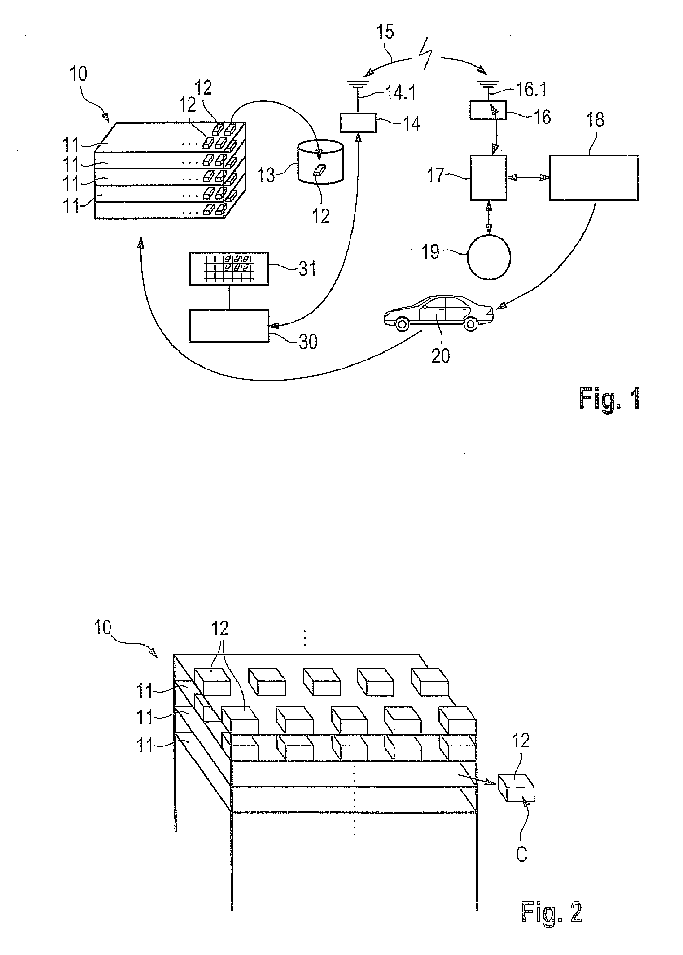

In Figur 1 ist als Kanban-System eine Lagereinheit 10 mit Behältern 12 dargestellt. Die Lagereinheit 10 ist üblicherweise in Form eines Regals in einer Fertigungshalle aufgestellt. Die Lagereinheit 10 besteht aus einem Gestell mit einzelnen Fachböden 11. Auf die Fachböden 11 ist eine Vielzahl von Behältern 12 aufgestellt. Zur besseren Übersichtlichkeit sind nur einige Behälter 12 in Figur 1 gezeigt. Bei Kanban-Systemen sind üblicherweise zwei oder mehrere baugleiche Behälter 12 mit gleichen Füllgütern hintereinander aufgestellt. Jeder Behälter 12 besitzt ein auslesbares Informationselement, beispielsweise einen Barcode. In den Behältern 12 sind Verbrauchsgüter, beispielsweise Schrauben, Dichtungen, Muttern, Kugellager etc. untergebracht. Von den in Tiefenrichtung der Lagereinheit 10 hintereinander gestellten Behälter 12 wird üblicherweise der zu vorderst stehende Behälter 12, der dem Monteur zugekehrt ist, als "im Zugriff" definiert. Der in Tiefenrichtung der Lagereinheit 10 dahinter stehende Behälter 12 wird als "im Vorrat" bezeichnet. Während des Montagevorganges bedient sich der Monteur aus dem im Zugriff befindlichen Behältern 12. Wenn ein Behälter 12 leer ist, entnimmt der Monteur diesen aus der Lagereinheit 10 und gibt ihn in ein Reservoir 13. Dieser Behälter 12 kann dann gescannt werden. Die gescannte Information wird mittels einer Übertragungseinheit 14, die den Scanner enthalten kann, über eine Übertragungsstrecke 15 an eine Übertragungseinheit 16 übermittelt. Die Übertragungsstrecke 15 kann beispielsweise eine Internetverbindung sein, die über entsprechende Übertragungsanschlüsse 14.1 bzw. 16.1 an die Übertragungseinheiten 14 und 16 gekoppelt ist. Während die Übertragungseinheit 14 der Fertigungsstätte, in der die Lagereinheit 10 aufgestellt ist, zugeordnet ist, ist die Übertragungseinheit 16 dem Verbrauchsgutlieferanten zugeordnet. Die in der Übertragungseinheit 16 empfangenen Zustandsdaten der Behälter 12 werden in einer Verknüpfungseinrichtung 17 aufbereitet und diese Zustandsdaten oder daraus errechnete Größen in einer Speichereinheit 19 abgelegt.

Aus den Zustandsdaten kann unmittelbar ein Lieferauftrag abgeleitet werden, der an ein Warenlager 18 übermittelt wird. In dem Warenlager 18 wird dann ein Behälter 12 mit dem angeforderten Verbrauchsgut befüllt, und dieser Behälter 12 dann mittels eines Transportmediums 20 der Fertigungsstätte zugeliefert. In der Fertigungsstätte wird der Behälter 12 dann wieder in die Lagereinheit 10 einsortiert. Entweder beim Platzieren des Behälters 12 in der Lagereinheit 10 oder bereits bei der Befüllung im Warenlager 18 wird dieser Behälter 12 gescannt und die dabei ermittelten Zustandsdaten über die Verknüpfungseinrichtung 17 in der Speichereinheit 19 abgelegt. Im vorliegenden Ausführungsbeispiel wird der Scanvorgang direkt im Warenlager 18 vorgenommen.

In der Fertigungseinrichtung eine Datenverarbeitungsanlage 30 vorhanden, der eine Bilderzeugungseinheit 31 zugeordnet ist. Die Datenverarbeitungsanlage 30 ist an die Übertragungseinheit 14 angeschlossen und kann damit über die Übertragungsstrecke 15 und die Verknüpfungseinrichtung 17 Zugriff auf die Speichereinheit 19 erlangen. Die Datenverarbeitungsanlage 30 kann nun Daten aus der Speichereinheit 19 anfordern, die dann von der Verknüpfungseinheit 17 in eine Form gebracht werden, die eine Visualisierung auf der Bilderzeugungseinheit 31 ermöglichen. Alternativ können die Daten aus der Speichereinheit 19 auch der Datenverarbeitungsanlage 30 zugeführt werden, in der sie mittels einer Programmstruktur in ein Format aufbereitet werden, das von der Bilderzeugungseinheit 31 darstellbar ist.

Figur 2 zeigt eine beispielhafte Darstellung auf einer Bilderzeugungseinheit 31, wobei zur besseren Übersichtlichkeit nur eine Teildarstellung gezeigt ist. Wie diese zeigt, wird auf der. Bilderzeugungseinheit 31 die Lagereinheit 10 mit ihren Regalböden 11 bildlich visualisiert. Weiterhin werden die Behälter 12, die auf den Regalböden 11 aufgestellt sind, mittels Grafiken visualisiert. Dabei ist die Zuordnung der einzelnen Behälter 12 auf den Lagerböden 11 der Lagereinheit 10 entsprechend mit Grafiken auf der Bilderzeugungseinheit 31 visualisiert. Auf diese Weise erhält ein Betrachter eine bildliche Darstellung der Lagereinheit 10. Mittels einer Cursorsteuerung kann ein Cursor C auf einen beliebigen Behälter 12 der Lagereinheit 10 geführt werden. Wird dieser Behälter 12 angeklickt, so wird von der Datenverarbeitungsanlage 30 eine Anfrage an die Speichereinheit 19 gesendet, die die entsprechenden Zustandsdaten des ausgewählten Behälters 12 übermittelt. Diese übermittelten Zustandsdaten werden dann aufbereitet und beispielsweise tabellarisch und in numerischer Form dem Betrachter angezeigt. Beispielsweise können dann die Zustandsdaten Positionswerte des Behälters 12, Füllzustände, die Art des Verbrauchsgutes, die Behältergröße, die Artikelnummer, die Artikelbezeichnung, den Produktpreis oder die Mindestverpackungsgröße, die bestellt werden kann, etc. enthalten.

Wie Figur 2 veranschaulicht, wird der Behälter 12, der mittels der Cursorsteuerung angewählt wird, optisch an einer anderen Stelle der Bilderzeugungseinheit 31 neu erstellt werden, sodass der Benutzer den ausgewählten Lagerort besser erkennen kann.

Wird, wie Figur 2 dies erkennen lässt, der Cursor C mittels der Cursorsteuerung auf den verschobenen Behälter 12 gestellt, und dieser dann angeklickt, so rückt der Behälter 12 in seiner grafischen Darstellung wieder an seinen ursprünglichen Platz innerhalb der Lagereinheit 10 zurück. Anstelle der in Figur 2 gezeigten dreidimensionalen matrixartigen Darstellung kann auch eine zweidimensionale Bilddarstellung Verwendung finden, die die Anordnung der Behälter 12 in der Lagereinheit 10 visualisiert.

Der Datenverarbeitungsanlage 30 und/oder der Verknüpfungseinrichtung 17 können auch Filtereinheiten zugeordnet sein, die Zustandsdaten der Behälter 12 mit Soll-Werten vergleichen. Abhängig von diesem Vergleichsergebnis kann dann die optische Anmutung der Behälter 12 individuell von einer Recheneinheit erzeugt werden. Beispielsweise kann die Filtereinheit die Reichweite der Behälter 12 farbig darstellen. Wenn beispielsweise eine Reichweite eingegeben wird, die unterhalb einer bestimmten Grenzreichweite liegt (beispielsweise Behältervorrat nur noch ausreichend für X Tage), dann werden alle Behälter, die die kritische Grenzreichweite unterschritten haben, rot visualisiert, während die anderen Behälter 12 in einer anderen Farbe visualisiert bleiben. Auf diese Weise können beispielsweise auch Filter Verwendung finden, die abnahmepflichtige Verbrauchsgüter darstellen. Abnahmepflichtige Verbrauchsgüter sind solche Verbrauchsgüter bezüglich derer eine Abnahmeverpflichtung mit dem Verbrauchsgüterlieferanten besteht.

## Patentansprüche

1. Vorrichtung zur Visualisierung von Lagerdaten, insbesondere eines Kanban-Systems, wobei in wenigstens einer Lagereinheit (10) mehrere Behälter (12) mit Verbrauchsgütern angeordnet sind, wobei einer Speichereinheit (19) Zustandsdaten der Behälter (12) über eine Datenübertragungsverbindung (15) zuleitbar sind, wobei die Zustandsdaten in einer Verknüpfungseinrichtung (17) verschaltbar sind, und wobei die Zustandsdaten eines oder mehrerer Behälter (12) oder eine daraus errechneten Größe optisch und/oder akustisch an einer Signalisierungseinheit (31) ausgebbar sind.

2. Vorrichtung nach Anspruch 1,
**dadurch gekennzeichnet,**
**dass** die Zustandsdaten Füllzustände der Behälter (12) sind oder beinhalten.

3. Vorrichtung nach Anspruch 1 oder 2,
**dadurch gekennzeichnet,**
**dass** aus den Zustandsdaten oder den daraus errechneten Größen eine Bilddarstellung erzeugt ist, die zwei- oder dreidimensional matrixartig die Behälter (12) entsprechend ihrer Anordnung in der Lagereinheit (10) visualisiert.

4. Vorrichtung nach einem der Ansprüche 1 bis 3,
**dadurch gekennzeichnet,**
**dass** die die Behälter (12) repräsentierenden Grafiken in unterschiedlichen optischen Anmutungen, insbesondere Farben, darstellbar sind.

5. Vorrichtung nach einem der Ansprüche 1 bis 4,
**dadurch gekennzeichnet,**
**dass** mittels einer Filtereinheit Zustandsdaten der Behälter (12) mit Soll-Werten verglichen werden, und dass abhängig von diesem Vergleichsergebnis die optische Anmutung der Behälter (12) individuell von einer Recheneinheit erzeugt wird.

6. Vorrichtung nach einem der Ansprüche 1 bis 5,
**dadurch gekennzeichnet,**
**dass** die die Behälter (12) repräsentierenden Grafiken individuell mittels einer Cursorsteuerung anwählbar sind, und dass von dem der angewählten Grafik zugeordneten Behälter (12) numerisch alle oder einige Zugangsdaten angezeigt werden.

7. Vorrichtung nach einem der Ansprüche 1 bis 6,
**dadurch gekennzeichnet,**
**dass** die die Behälter (12) repräsentierenden Grafiken individuell mittels einer Cursorsteuerung anwählbar sind, und dass bei Anwahl einer Grafik diese optisch an einer anderen Stelle der Bilderzeugungseinheit (31) neu erstellt wird.

8. Vorrichtung nach einem der Ansprüche 1 bis 7,
**dadurch gekennzeichnet,**
**dass** auf der Bilderzeugungseinheit (31) eine Auswahlliste erzeugt ist, die zumindest einen Teil der Behälter (12) mit Kennungen enthält, und dass bei Auswahl einer Kennung eine Grafik, die den angewählten Behälter (12) repräsentiert; in optischer individualisierter Darstellung anzeigt.

9. Vorrichtung nach einem der Ansprüche 2 bis 8,
**dadurch gekennzeichnet,**
**dass** die Grafiken in ihrer Positionierung innerhalb der matrixartigen Darstellung versetzbar sind, und dass dieser Positionswechsel an die Verknüpfungseinrichtung (17) übermittelbar ist.

10. Vorrichtung nach einem der Ansprüche 1 bis 9,
**dadurch gekennzeichnet,**
**dass** die Zustandsdäten mittels einer Zeitmesseinrichtung feststellbar sind.

11. Vorrichtung nach einem der Ansprüche 1 bis 10,
**dadurch gekennzeichnet,**
**dass** die Zustandsdaten Ortsangaben enthalten, die die Position des Behälters (12) innerhalb der Lagereinheit (10) angeben.

12. Verfahren zur Visualisierung von Lagerdaten, insbesondere eines Kanban-Systems, wobei in wenigstens einer Lagereinheit (10) mehrere Behälter (12) mit Verbrauchsgütern angeordnet werden, wobei einer Speichereinheit (19) Zustandsdaten der Behälter (12) über eine Datenübertragungsverbindung (15) zugeleitet werden, wobei die Zustandsdaten in einer Verknüpfungseinrichtung (17) in Abhängigkeit voneinander verarbeitet werden, und wobei die Zustandsdaten eines oder mehrerer Behälter (12) oder eine daraus errechneten Größe optisch und/oder akustisch an einer Signalisierungseinheit (31) ausgegeben werden.

13. Speichermedium, auf dem ein Programm oder ein Programmteil zur Durchführung des Verfahrens nach Anspruch 12 gespeichert ist.
